Europäisches Patentamt

**European Patent Office**  (11) Numéro de publication: **0 043 783**

Office européen des brevets  A1

(19)

(12)                      # DEMANDE DE BREVET EUROPEEN

(21) Numéro de dépôt: **81420094.5**

(22) Date de dépôt: **24.06.81**

(51) Int. Cl.³: **A 63 B 71/06,** A 63 B 61/00,
G 09 F 7/02, G 09 F 7/08,
G 09 F 7/10, G 09 F 15/00

(30) Priorité: **26.06.80 FR 8014688**

(71) Demandeur: **Huissoud, Bernard Ernest, Les Aravis
Reignier, F-74800 La Roche-sur-Foron (FR)**

(43) Date de publication de la demande: **13.01.82
Bulletin 82/2**

(72) Inventeur: **Huissoud, Bernard Ernest, Les Aravis
Reignier, F-74800 La Roche-sur-Foron (FR)**

(74) Mandataire: **Hagry, François, Cabinet François
Hagry 2, rue du Huit Mai, F-74100 Annemasse (FR)**

(84) Etats contractants désignés: **DE FR GB IT**

(54) **Dispositif inviolable d'affichage de réservation d'un droit d'usage, notamment de places de jeu.**

(57)   Dispositif inviolable d'affichage de réservation pour un moment donné de l'exercice d'un droit d'usage d'une chose, se présentant sous la forme d'un tableau de lignes et de colonnes (11) correspondant respectivement à la chose et au moment de l'exercice et définissant des cases (12) où sont déposés des jetons personnalisés (33). Chaque colonne (11) se présente sous forme d'empilement de fenêtres transparentes (12, 23) derrière lesquelles des cavités (15) retiennent de façon visible et sans possibilité d'extraction les jetons de réservation (33) avant l'expiration de droit. A ce moment une glissière (13) actionnée par une came (30) met en correspondance des lumières (26) avec les cavités (15), et les jetons (33) sont extraits par gravité pour être récupérés et éventuellement contrôlés. Le dispositif selon l'invention trouve une utilisation particulièrement intéressante pour la réservation irrévocable d'aires de jeu, notamment de courts de tennis, domaine dans lequel les réservations frauduleuses sont fréquentes.

0043783

L'invention est relative aux dispositifs d'affichage de réservation pour un moment donné et pour une durée donnée d'un droit d'usage d'une chose ou d'une prestation, ce droit étant réglementé quant au nombre de fois qu'il peut être exercé et éventuellement quant à la fréquence de cet exercice. Elle s'applique notamment aux places, installations, matériels, prestations, utilisés par des collectivités et dont l'usage est limité par voie réglementaire, car ne pouvant matériellement être exercé simultanément que par un nombre restreint d'invidus ou de groupes d'individus. Cette situation se présente en particulier dans les clubs et associations et, bien que pouvant s'appliquer dans bien d'autres domaines extra-sportifs, l'invention va, pour la clarté, être exposée en prenant l'exemple de la réservation d'installations sportives et plus particulièrement de courts de tennis.

La demande d'utilisation de courts de tennis, à une date et une heure données, par les membres d'un club est, sauf à des moments privilégiés, presque toujours de loin supérieure à la disponibilité réelle de ces courts. Aussi est-il d'usage courant d'en réglementer l'utilisation en limitant le nombre de fois pendant une période déterminée, qu' un membre peut utiliser un court, et par voie de conséquence, d'imposer un système de réservation préalable obligatoire.

Un système de réservation fréquemment utilisé consiste en l'inscription sur un support quelconque, par exemple feuille volante ou tableau, par les joueurs, de leur nom en correspondance avec le court et l'heure qu'ils entendent réserver. Ce système, qui présente l'avantage de la simplicité, se prête à de nombreuses possibilités d'abus ou de fraude. Ainsi, il est courant que certains joueurs s'inscrivent un plus grand nombre de fois que ne l'autorise le règlement interne. Un contrôle de la réalité du droit revendiqué peut être très long, aléatoire, et par là même pratiquement impossible. Par ailleurs, s'ajoutent à ceci d'autres sortes de fraudes telles que l'inscription volontairement illisible d'un nom, l'inscription sous un faux nom qui pourrait être considéré comme celui d'un membre nouvellement venu, l'inscription du nom d'un membre que l'on sait être absent, l'inscription de noms râturés ou surchargés de manière à provoquer l'incertitude, la subtilisation de la feuille volante ou l'effacement du tableau.

Un autre système prévoit l'utilisation d'un tableau à fiches mobiles, chaque membre disposant d'un nombre déterminé de fiches à son nom et déposant une de ses fiches dans la case correspondant au court et à l'heure qu'il entend réserver. Ce système laisse place lui aussi à des manoeuvres frauduleuses telles que la réservation au nom d'un membre absent, à son insu ou non, la subtilisation, la substitution ou le déplacement de fiches, ainsi que la confection de fiches supplémentaires.

Les inconvénients de ces deux genres de systèmes connus peuvent être partiellement tempérés en ne permettant pas aux joueurs l'accès direct aux tableaux d'affichage des réservations, mais ceci nécessite la présence d'un responsable qui doit être permanente, et dans le cas contraire, la possibilité de réservation n'est ouverte que pendant les seules heures de présence de celui-ci.

La présente invention a pour but d'éviter les inconvénients qui viennent d'être évoqués en proposant un dispositif d'affichage de réservation éliminant les risques de fraudes tout en restant libre d'accès par des personnes désireuses de réserver, la réservation étant rendue irrévocable par l'inviolabilité des réservations déjà affichées, ce dispositif ne nécessitant pas de clés ou instruments similaires pour sa mise en oeuvre.

Selon le système mis en oeuvre par ce dispositif, chaque titulaire d'un droit de réservation ou membre dispose d'un nombre de jetons déterminé, marqués à son nom propre ou personnalisés d'une autre manière. Chaque jeton peut en outre être pourvu d'un signe d'authentification, par exemple un poinçon permettant de mettre en évidence le caractère illicite de toute réplique exécutée frauduleusement. Pour la réservation, le jeton est introduit dans une case correspondant au court et à l'heure choisis et y reste visible sans pouvoir en être retiré irrégulièrement. Avant d'exercer son droit ainsi réservé, le membre peut apposer au regard de la case concernée sa carte de légitimation portant éventuellement sa photographie pour rendre évidente toute fraude sur le nom commise avant ou après l'introduction des jetons; ainsi tout vol ou prêt illicite de jeton est mis en évidence. A l'heure où le droit d'usage arrive à expiration, les jetons concernés sont escamotés par un mécanisme actionné par un chariot ou traînard déplaçable par pas successifs correspondant à la durée de chaque utilisation du court (par exemple une heure) et venant se positionner sous chaque case de réservation, ou colonne de cases dans le cas de plusieurs courts. Les jetons escamotés sont recueillis dans un bac de récupération d'où ils pourront, selon règlement interne être extraits, soit par un contrôleur, soit par leurs titulaires ou bien immédiatement, ou bien périodiquement: fin de journée, ou à date fixe.

Un exemple de dispositif selon l'invention pour la mise en oeuvre d'un tel système est présenté dans la description qui suit et pour l'intelligence de laquelle on se réfèrera aux dessins parmi lesquels :

- la figure 1 représente en perspective un dispositif d'affichage de réservation pour six courts de tennis et vingt cinq heures d'utilisations,

- la figure 2 montre en coupe en position de repos, à gauche, et en position active, à droite, le dispositif d'affichage (pour deux courts seulement par raison de commodité) selon l'invention,

- la figure 3 est une vue partielle de face d'un détail du même dispositif,

- la figure 4, une coupe partielle selon le plan XX identifié à la figure 3,

- la figure 5 illustre la mise en jeu du mécanisme,

- et la figure 6 le fonctionnement de moyens de sécurité du mécanisme contre toute manoeuvre accidentelle.

Dans la forme d'exécution représentée, le dispositif selon l'invention comporte un bâti 1, avantageusement réalisé en tôle pliée, terminé par deux caissons latéraux 2. Entre les deux caissons latéraux 2 et fixés à ceux-ci courent sur toute la longueur du bâti 1, deux rails respectivement inférieur 3 et supérieur 4. Du rail inférieur 3 est solidaire sur toute sa longueur une tôle verticale 5 dont le bord inférieur 6 est avantageusement replié vers l'avant pour augmenter la rigidité, et le bord supérieur 7 sert de guide comme il sera dit plus loin. De la même manière une tôle verticale 8 est fixée au rail supérieur 4, son bord supérieur 9 étant replié vers l'arrière pour améliorer la rigidité et son bord inférieur 10 pouvant servir de guide de la façon décrite plus loin. Derrière les rails inférieur 3 et supérieur 4, sont disposées, régulièrement juxtaposées, des colonnes 11 identiques correspondant chacune à une heure d'utilisation des courts de tennis. Chaque colonne 11 est constituée par la combinaison d'un empilement d'éléments transparents ou fenêtres 12 de forme rectangulaire en plan, et d'une glissière 13 en tôle mince pliée de manière à maintenir les fenêtres 12 latéralement et vers l'avant ou l'arrière, mais en autorisant un déplacement relatif vertical.

Les fenêtres 12 se présentent sous forme de plaquettes planes en matériau transparent, par exemple plastique, dans lesquelles sont ménagées des cavités formant couloirs, antérieures 14 et postérieures 15 débouchant respectivement sur chaque bord inférieur et supérieur de ces plaquettes tout en laissant subsister des rebords latéraux verticaux 16, ceux-ci servant au guidage de la fenêtre dans la glissière 13, comme l'illustre le mieux la figure 4. Bien que d'autres géométries puissent être envisagées, la cavité antérieure 14 se présente sous la forme d'une rampe plane inclinée 17 , la plus grande profondeur étant atteinte au niveau du bord inférieur de la fenêtre, et la cavité postérieure 15 sous la forme d'une première rampe inclinée et courte 17, prolongée par un plan 19 parallèle au plan moyen de la plaquette et par une seconde rampe inclinée 20, la plus grande profondeur étant atteinte au niveau du bord supérieur de la fenêtre 12.

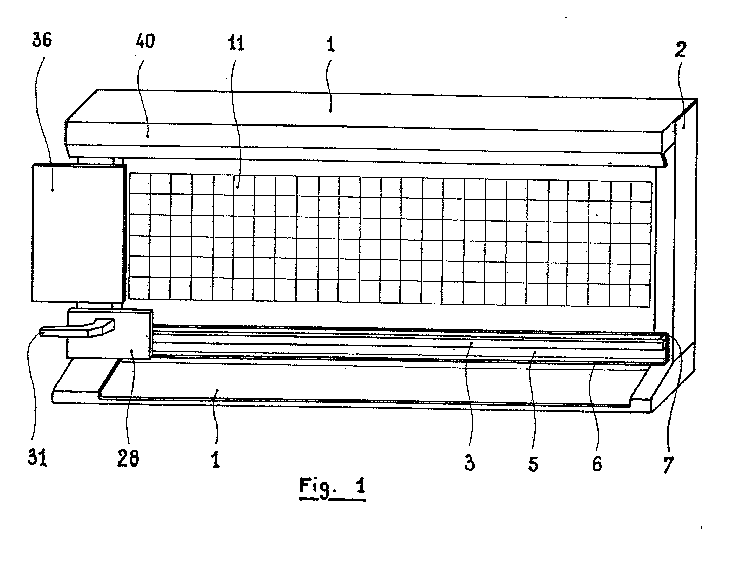

Les fenêtres 12 telles que décrites sont empilées successivement dans la glissière 13 où elles sont maintenues transversalement et guidées verticalement.Elles s'appuient les unes sur les autres par l'extrémité des rebords verticaux 16 limitant latéralement les cavités 14 et 15. A la figure 2, correspondant à seulement deux courts de tennis, une seule fenêtre 12 comprenant tous les éléments qui viennent d'être décrits est présente, mais il est évident qu'il peut y en avoir davantage, par exemple cinq comme dans la représentation de la figure 1. La colonne 11 se termine au sommet par une fenêtre supérieure 22 identique aux précédentes 12, à la seule différence près qu'elle est tronquée, la rampe 20 étant absente, cette fenêtre supérieure 22 est fixée par tout moyen, figuré en trait mixte, au rail 4, avec le cas échéant interposition d'une entretoise 21. La colonne 11 se termine à sa base par une fenêtre inférieure 23 identique aux fenêtres 12 mais tronquée où la rampe inférieure 17 est absente, cette fenêtre inférieure 23 reposant enfin sur une autre fenêtre tronquée 24 identique à la fenêtre supérieure 22 mais en position inversée, et de la même manière que cette dernière, fixée au rail inférieur 3 par l'intermédiaire de la tôle 5 et le cas échéant d'une entretoise 21.

L'empilement des fenêtres 12,22,23,24 où peut subsister un léger jeu apparaissant sous la fenêtre 22 est ainsi fixe par rapport aux rails 3 et 4, donc au bâti 1.

Comme il a déjà été dit, les fenêtres 12,22,23,24 sont enfermées dans une glissière 13 les maintenant avec un léger jeu contre tout déplacement relatif autre que vertical. La glissière 13, elle, n'est pas solidaire d'éléments fixes par rapport au bâti 1. Elle est au contraire guidée verticalement par l'empilement des fenêtres. Elle présente à son sommet une pliure vers l'avant 25, qui en position de repos s'appuie sur l'extrémité de la fenêtre supérieure 22. Dans la glissière 13 sont ménagées, à espaces réguliers en regard des zones des fenêtres 12,23,24 autres que les cavités postérieures 15, des lumières rectangulaires 26. A son extrémité inférieure libre, la glissière 13 présente une forme de came 27, par exemple de profil triangulaire.

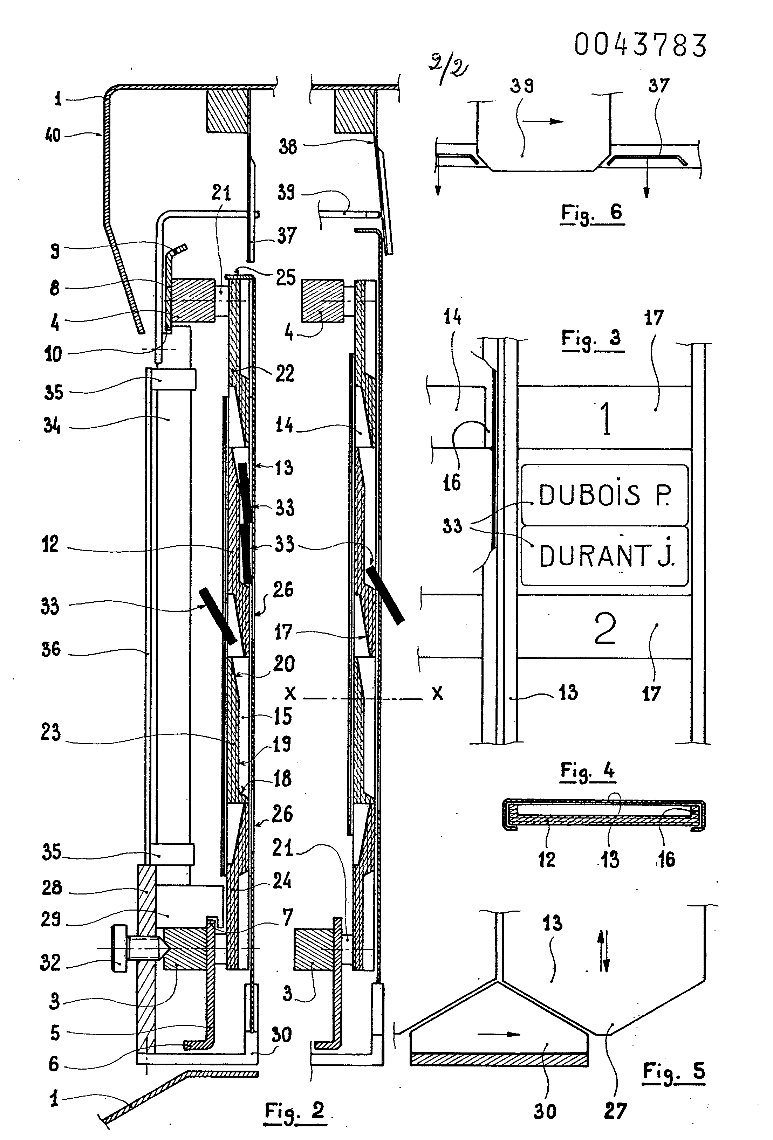

Un chariot ou traînard 28 est porté par le rail inférieur 3 sur lequel il peut se déplacer en étant supporté par un galet ou patin 29 guidé par le bord supérieur 7 de la tôle verticale 5. Le chariot 28 porte à sa partie inférieure une came 30 de profil correspondant à celui de l'extrémité inférieure 27 de la glissière 13 et situé dans le même plan. Le chariot 28 peut être déplacé sur le rail 3 par tout moyen approprié: manuellement par une poignée 31, ou par tout autre dispositif automatique ou semi-automatique temporisé. Il est muni d'un système de positionnement par exemple une vis 32 dont l'extrémité coopère avec des repères en creux dans le rail 3 et dont le pas correspond à celui de la succession de colonnes 11. En état de repos, le chariot 28 est positionné de manière que la came 30 se trouve entre deux sommets des profils de came 27 de deux glissières justaposées 13, donc sans exercer d'action sur celles-ci.(comme représenté à la figure 5). Lorsque le chariot 28 va être déplacé sur le rail 3, la came 30 coopérant avec la forme 27 de la glissière 13 concernée va pousser cette dernière vers le haut. Les deux profils de came 30, 27 sont dimensionnés de sorte que lorsque la glissière 13 arrive à son point mort haut, les lumières 26 soient au regard de la partie inférieure des cavités postérieures 15 des fenêtres 12 et 23, comme il est représenté à la figure 2 à droite.

Le fonctionnement du dispositif qui vient d'être décrit va maintenant être illustré à l'aide d'un exemple, chaque colonne 11 correspondant à une heure fixée à l'avance et un jour donné, ces jours et heures pouvant être affichés sur le bâti 1 au-dessus des colonnes 11 comme on le verra plus loin. Les numéros des courts de tennis disponibles peuvent également être affichés sur les bords du bâti 1 par exemple sur les caissons latéraux 2 ou, comme représenté à la figure 3, sur les rampes inclinées antérieures 17 des fenêtres 22 et 12(courts 1 et 2). L'ensemble se présente alors sous la forme d'un tableau ordonné . Les joueurs disposent de jetons rectangulaires 33 portant leurs noms de dimensions correspondant à celles des cavités postérieures 15 pour que celles-ci puissent recevoir un certain nombre de ces jetons 33, deux dans le cas illustré. La colonne correspondant au choix de deux joueurs désireux de réserver est en position de repos. Ceux-ci introduisent chacun un de leurs jetons 33 en le poussant vers le bas le long de la rampe inclinée antérieure 17 correspondant au court choisi. La cavité antérieure 14 communiquant avec la cavité postérieure 15 de la fenêtre 12 située immédiatement en dessous, et formant ainsi une fente d'introduction, les jetons 33, guidés par les rampes 17 et 20 tombent dans cette cavité postérieure 15 où ils restent immobilisés par la rampe 18 et la glissière 13, mais néanmoins toujours visibles à travers la fenêtre 12. Les jetons 33 ne pouvant normalement pas être récupérés sans détérioration du dispositif, la réservation(du court 1 sur les figures 2 et 3) est irrévocable. Entre-temps le chariot 28 est régulièrement déplacé par pas successifs le long du rail 3. A l'heure considérée, la came 30 se trouve par rapport à la glissière 13 de la colonne correspondante dans la position de la figure 5. Pendant que cette heure s'écoule, le dispositif reste en l'état et il est toujours possible de savoir qui a réservé et de contrôler qu'il s'agit effectivement des joueurs en action sur le court. A l'expiration de l'heure d'utilisation, le chariot 28 est déplacé d'un pas: la came 30 soulève la glissière 13, les lumières 26 arrivent au droit des cavités 15 et les jetons 33 guidés par la rampe inclinée 18 tombent par simple gravité (figure 2 à droite) et la glissière 13 retombe dans sa position de repos, la colonne 11 étant prête pour de nouvelles réservations. Les jetons 33 peuvent tomber dans un caisson de récupération (non représenté) au fond du bâti 1 ou solidaire du chariot 28 d'où ils pourront être enlevés ultérieurement par les joueurs eux-mêmes, ou pour contrôle, selon le règlement interne.

Dans l'exécution représentée, le chariot 28 est porteur d'un axe vertical 34 sur lequel peut osciller par l'intermédiaire de bagues 35 un tableau 36 sur lequel peuvent être apposées toutes informations utiles, par exemple, les numéros des courts s'ils ne sont déjà affichés sur les rampes 17, ou les cartes des membres ayant réservé, juste avant que ceux-ci ne fasse usage de leur option. Le tableau 36 peut être rappelé dans sa position d'affichage par un ressort (non représenté). En rabattant le tableau 36 vers l'avant, il est possible d'avoir accès aux colonnes 11, qui ont été libérées aux heures précédentes et de les utiliser déjà pour de nouvelles réservations.

Pour assurer la bonne tenue mécanique de l'ensemble chariot 28-tableau 36, le sommet de l'axe 34 est avantageusement guidé en translation par le bord inférieur 10 de la tôle supérieure 8. En outre,

7 0043783

pour.éviter toute manoeuvre accidentelle ou frauduleuse des glissières 13, leur déplacement vers le haut est empêché par des butées positives 37 situées juste au-dessus de la pliure 25. Ces butées 37 se trouvent à l'extrémité de ressorts à lame 38 solidaires à leur autre extrémité de la partie supérieure du bâti 1. Elles sont escamotées par une came 39(vue partielle en plan à la figure 6) portée par la partie supérieure de l'axe 34 et qui travaille en concordance avec la came 30 (figure 2 à droite). Cette partie supérieure du mécanisme peut en outre être avantageusement protégée par une avancée 40 du bâti 1 repliée vers le bas et qui peut en outre servir de surface d'affichage supplémentaire.

Dans le cas où le chariot 28 est commandé manuellement et pour en éviter des manoeuvres illicites, il peut par ailleurs être utile de le verrouiller positivement en position au moyen d'une clé spéciale en possession d'un responsable.

Comme il a été dit dans l'introduction de la présente demande, le dispositif de réservation inviolable qui vient d'être décrit en prenant l'exemple d'une utilisation pour la réservation de courts de tennis, peut être utilisé dans bien d'autres domaines y compris extra-sportifs, en changeant évidemment comme il convient la nature des informations affichées.

## REVENDICATIONS

1. Dispositif d'affichage de réservation pour un moment déterminé de l'exercice d'un droit d'usage d'au moins une chose ou une prestation, comprenant un tableau ordonné comportant au moins une ligne correspondant à la chose et plusieurs colonnes correspondant aux différents moments où le droit peut être exercé, l'intersection de la ligne et d'une colonne définissant une case où le nom ou l'identité d'au moins un usager peut être affiché au moyen d'un jeton personnalisé, caractérisé par le fait que chaque colonne (11) se présente sous la forme d'une pile d'au moins une fenêtre transparente (12,23) derrière laquelle est ménagée une cavité(15) dans laquelle un jeton(33), introduit pour réserver, y reste visible sans possibilité d'extraction avant l'échéance de l'exercice du droit et en est extrait après l'expiration de celui-ci, que la pile de fenêtres (12, 23) de chaque colonne (11) du tableau est fixe et logée dans une glissière (13) la maintenant latéralement et vers l'avant et l'arrière, mais de manière à n'autoriser qu'un déplacement vertical relatif de la glissière (13) par rapport aux fenêtres (12, 23) et à ce qu'en position normale la glissière (13) ferme à l'arrière les cavités (15), que dans la glissière (13) sont ménagées des lumières (26) de dimensions en rapport avec celles des cavités (15) et qui, en position normale, ne coïncident pas avec elles, mais peuvent venir en coïncidence à la suite ou pendant un déplacement vertical de la glissière (13).

2. Dispositif d'affichage selon la revendication 1, caractérisé par le fait que la cavité (15) débouche au voisinage du sommet de la fenêtre (12,23) sous la forme d'une fente horizontale(20,17) par laquelle les jetons(33) sont introduits par gravité dans la cavité (15).

3. Dispositif d'affichage selon la revendication 2, caractérisé par le fait que la fente horizontale(20,17) est définie par une rampe inclinée postérieure (20) située à la partie supérieure de la cavité(15), et coopérant avec une rampe inclinée antérieure(17) ménagée dans une pièce ou autre fenêtre(22,12) située immédiatement au-dessus de la fenêtre considérée(12,23).

4. Dispositif d'affichage selon l'une quelconque des revendications 1 à 3, caractérisé par le fait qu'en position normale la glissière (13) repose par son extrémité supérieure (25) sur la pile de fenêtres (22, 12, 19).

5. Dispositif d'affichage selon l'une quelconque des revendications 1 à 4, caractérisé par le fait qu'en bas du tableau et fixe par rapport

0043783

à celui-ci, se trouve un rail horizontal(3) sur lequel peut se déplacer un chariot(28) réglable en position(32) et porteur d'une came(30) coopérant avec l'extrémité inférieure(27) des glissières(13) pour soulever celles-ci pendant le déplacement du chariot(28) et amener ainsi les lumières(26) en coïncidence avec les cavités(15) et laisser revenir les glissières(13) en position normale à la fin du déplacement.

6. Dispositif d'affichage selon la revendication 5, caractérisé par le fait que du chariot(28) est solidaire un axe vertical (34) dont l'extrémité supérieure porte une came(39) pour escamoter des butées(37) s'opposant, en position normale, au déplacement vertical des glissières(13).

7. Dispositif d'affichage selon la revendication 6, caractérisé par le fait que les butées(37) sont ramenées en position normale au moyen de ressorts(38).

8. Dispositif d'affichage selon la revendication 6 ou la revendication 7, caractérisé par le fait que le déplacement du chariot(28) avec l'axe(34) est guidé par un rail horizontal(4) situé au sommet du tableau.

9. Dispositif d'affichage selon l'une quelconque des revendications 6 à 8, caractérisé par le fait que l'axe vertical(34) est porteur d'un panneau d'affichage vertical(36).

10. Dispositif d'affichage selon la revendication 9, caractérisé par le fait que le panneau(36) peut osciller autour de l'axe(34) à l'encontre d'un ressort de rappel.

1/2

Fig. 1

0043783

2/2

Fig. 6

Fig. 3

DUBOIS P.

DURANT J.

1

2

Fig. 4

Fig. 5

Fig. 2

**Office européen des brevets**

**RAPPORT DE RECHERCHE EUROPEENNE**

0043783

Numéro de la demande

EP 81 42 0094

## DOCUMENTS CONSIDERES COMME PERTINENTS

| Catégorie | Citation du document avec indication, en cas de besoin, des parties pertinentes | Revendication concernée |
|---|---|---|
| | FR - A - 358 464 (EMILE GIROUX) <br><br> * Résumé; page 1, lignes 10-29; page 2, lignes 27-37; figures 1-6 * <br><br> --- | 1-3 |
| A | DE - C - 227 015 (G. SACHTLEBEN et al.) <br><br> * Revendication; figures 1 et 2 * <br><br> --- | 1 |
| A | US - A - 4 154 442 (PATTERSON-WILLIAMS MANUFACTURING) <br><br> * Revendications 1,2; figure 1 * <br><br> --------- | 1 |

**CLASSEMENT DE LA DEMANDE (Int. Cl.³)**

A 63 B 71/06
         61/00
G 09 F  7/02
         7/08
         7/10
        15/00

**DOMAINES TECHNIQUES RECHERCHES (Int. Cl.³)**

A 63 B 71/06
         61/00
G 09 F  7/02
         7/08
         7/10
        15/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06.10.1981 | FRANSEN |

OEB Form 1503.1   06.78